# EUROPEAN PATENT APPLICATION

(11) **EP 4 694 152 A1**
(43) Date of publication of application: **11.02.2026**
(21) Application number: 24777713.9
(22) Date of filing: 12.03.2024
(51) Int. Cl.: H04N 21/458, G06F 16/48

(54) **METHOD AND APPARATUS FOR BOOKMARKING MEDIA CONTENT, ELECTRONIC DEVICE, AND STORAGE MEDIUM**

(30) Priority: 27.03.2023 CN 202310312053
(71) Applicant: Beijing Zitiao Network Technology Co., Ltd., Beijing 100190 (CN)
(72) Inventor: TANG, Yuxi, Beijing 100028 (CN); ZENG, Zhizheng, Beijing 100028 (CN)
(74) Representative: Marks & Clerk LLP
(86) International application number: PCT/CN2024/081265
(87) International publication number: WO 2024/198923

(57) **Abstract**

Embodiments of the present disclosure provide a method and an apparatus for favoriting media content, an electronic device, and a storage medium. The method includes: in response to a favorite operation for media content, adding the media content to a media content favorites list of a current user and displaying a favorites folder list of the current user, where the favorites folder list is configured to display a first identifier of at least part of favorites folders of the current user; and in response to a trigger operation for the first identifier, adding the media content to a favorites folder corresponding to the first identifier on which the trigger operation acts.

## Description

The present application claims priority to Chinese Patent Application No. 202310312053.6, filed with the China National Intellectual Property Administration on March 27, 2023 and entitled "METHOD AND APPARATUS FOR FAVORITING MEDIA CONTENT, ELECTRONIC DEVICE, AND STORAGE MEDIUM", which is incorporated herein by reference in its entirety.

### FIELD

Embodiments of the present disclosure relate to the field of computer technologies, and in particular, to a method and an apparatus for favoriting media content, an electronic device, and a storage medium.

### BACKGROUND

Currently, in some applications, users may favorite videos they watch. However, in the prior art, there is a fairly narrow selection of ways to favorite videos.

### SUMMARY

Embodiments of the present disclosure provide a method and an apparatus for favoriting media content, an electronic device, and a storage medium, to enrich the ways of favoriting media content.

According to a first aspect, an embodiment of the present disclosure provides a method for favoriting media content. The method includes:
in response to a favorite operation for media content, adding the media content to a media content favorites list of a current user and displaying a favorites folder list of the current user, the favorites folder list being configured to display a first identifier of at least part of favorites folders of the current user; and
in response to a trigger operation for the first identifier, adding the media content to a favorites folder corresponding to the first identifier on which the trigger operation acts.

According to a second aspect, an embodiment of the present disclosure further provides an apparatus for favoriting media content. The apparatus includes:
a list display module, configured to: in response to a favorite operation for media content, add the media content to a media content favorites list of a current user and display a favorites folder list of the current user, where the favorites folder list is configured to display a first identifier of at least part of favorites folders of the current user; and
a favorites folder addition module, configured to: in response to a trigger operation for the first identifier, add the media content to a favorites folder corresponding to the first identifier on which the trigger operation acts.

According to a third aspect, an embodiment of the present disclosure further provides an electronic device. The electronic device includes:
one or more processors; and
a memory configured to store one or more programs, where
the one or more programs is executed by the one or more processors to cause the one or more processors to implement the method for favoriting media content as described in the embodiments of the present disclosure.

According to a fourth aspect, an embodiment of the present disclosure further provides a computer-readable storage medium having a computer program stored thereon, where the program, when executed by a processor, implements the method for favoriting media content as described in the embodiments of the present disclosure.

### BRIEF DESCRIPTION OF THE DRAWINGS

The foregoing and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.
FIG. 1 is a schematic flowchart of a method for favoriting media content according to an embodiment of the present disclosure;
FIG. 2 is a schematic diagram of display of a favorites folder list according to an embodiment of the present disclosure;
FIG. 3 is a schematic diagram of display of another favorites folder list according to an embodiment of the present disclosure;
FIG. 4 is a schematic diagram of display of yet another favorites folder list according to an embodiment of the present disclosure;
FIG. 5 is a schematic diagram of display of a fourth favorites folder list according to an embodiment of the present disclosure;
FIG. 6 is a schematic diagram of display of a fifth favorites folder list according to an embodiment of the present disclosure;
FIG. 7 is a schematic diagram of display of a third identifier according to an embodiment of the present disclosure;
FIG. 8 is a schematic flowchart of another method for favoriting media content according to an embodiment of the present disclosure;
FIG. 9 is a schematic diagram of display of a favorites folder panel according to an embodiment of the present disclosure;
FIG. 10 is a schematic diagram of display of a favorites folder creation panel according to an embodiment of the present disclosure;
FIG. 11 is a block diagram of a structure of an apparatus for favoriting media content according to an embodiment of the present disclosure; and
FIG. 12 is a schematic diagram of a structure of an electronic device according to an embodiment of the present disclosure.

### DETAILED DESCRIPTION OF EMBODIMENTS

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above process of notifying and obtaining the authorization of the user is only illustrative and does not constitute a limitation on the implementations of the present disclosure, and other manners that satisfy the relevant laws and regulations may also be applied in the implementations of the present disclosure.

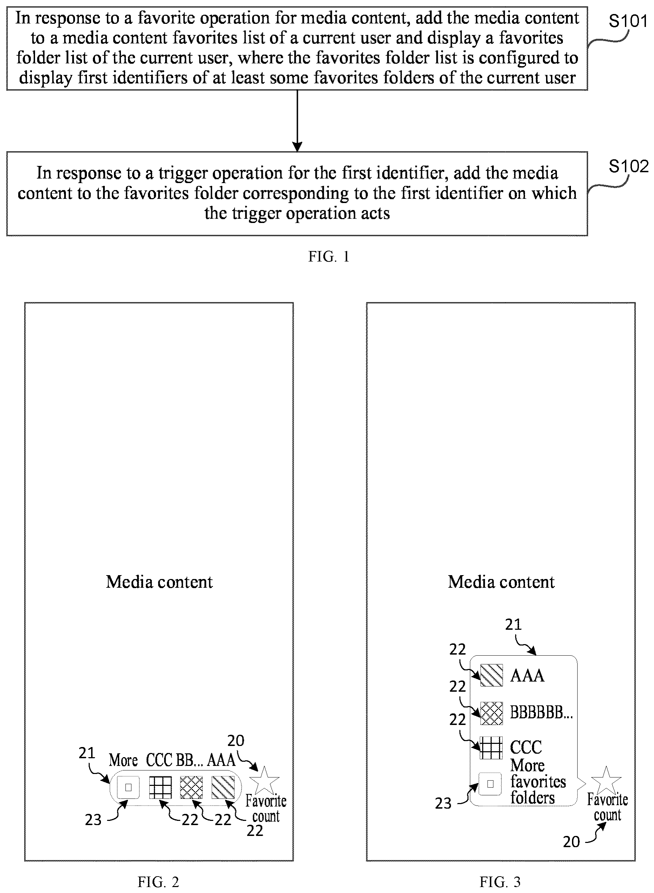

FIG. 1 is a schematic flowchart of a method for favoriting media content according to an embodiment of the present disclosure. The method may be performed by an apparatus for favoriting media content. The apparatus may be implemented by software and/or hardware, and may be configured in an electronic device, typically in a mobile phone or a tablet computer. The method for favoriting media content provided in this embodiment of the present disclosure is applicable to a scenario of favoriting media content. As shown in FIG. 1, the method for favoriting media content provided in this embodiment may include the following.

S101. In response to a favorite operation for media content, add the media content to a media content favorites list of a current user and display a favorites folder list of the current user, where the favorites folder list is configured to display a first identifier of at least part of favorites folders of the current user.

The favorite operation may be a trigger operation for instructing to favorite media content, which may or may not act on a favorite control corresponding to the media content. When acting on the favorite control corresponding to the media content, the favorite operation may be, for example, a touch and hold operation, a tap operation, or a drag operation, for the favorite control corresponding to the media content. An example of the favorite operation being a touch and hold operation acting on the favorite control is used for description below.

The media content may be understood as media content corresponding to the favorite operation, i.e., media content that the favorite operation instructs to favorite. For example, when watching media content, the current user may perform a favorite operation for the media content. In this case, the media content corresponding to the favorite operation is the media content currently displayed on a media content display page. The current user may be understood as a user who is currently performing the favorite operation.

The media content favorites list may be a list provided by a current application and configured to display media content currently favorited by the current user. In some embodiments, the media content favorites list may be configured to display at least part of the media content favorited by the current user. The at least part of media content may include media content in each favorites folder of the current user and/or media content favorited by the current user and not in any favorites folder. The favorites folder list may be a list of at least part of favorites folders of the current user, the favorites folders in the favorites folder list may be created by the current user or provided by the current application. An example of the favorites folders in the favorites folder list being created by the current user is used for description below.

It should be noted that although both the media content favorites list and the favorites folder are configured to display the media content favorited by the current user, they are different in nature, and the media content in the media content favorites list may be simultaneously in one or more favorites folders. For example, the current user may add one or more pieces of media content within the media content favorites list to one or more favorites folders through a preset trigger operation; and the media content in the media content favorites list may also be not in any favorites folder.

A first identifier of the favorites folder may be an identifier of a favorites folder displayed in the favorites folder list. The identifier may be configured to identify the corresponding favorites folder. The first identifier may be, for example, an icon and/or a name of the favorites folder.

For example, when a favorite operation for media content is received, such as when a touch and hold operation acting on a favorite control 20 corresponding to the media content is detected, the media content may be added to the media content favorites list of the current user, to achieve favoriting for the media content. The favorites folder list 21 of the current user is further displayed, and the first identifiers of at least part of favorites folders of the current user are displayed in the favorites folder list 21, as shown in FIGs. 2 and 3, so that the current user adds the media content to the corresponding favorites folder by triggering the first identifier.

In addition, as shown in FIGs. 2 and 3 (the first identifier is an icon and the third identifier is a name as an example in the figures), when the first identifier of a favorites folder is displayed in the favorites folder list 21, the third identifier of the favorites folder may be further displayed. The third identifier may be displayed at a position associated with the first identifier, the associated position may be outside of the favorites folder list 21 (as shown in FIG. 2) or within the favorites folder list 21 (as shown in FIG. 3), which may be specifically set as needed.

In this embodiment, in addition to displaying the first identifiers of at least part of favorites folders of the current user, the favorites folder list may be configured to display an interactive control related to favorites folder, such as a first control configured to be triggered to display a favorites folder panel and/or a second control configured to be triggered to display a favorites folder creation panel, and so on. In this case, optionally, at least one of a first control and a second control is displayed in the favorites folder list, the first control is configured to be triggered to perform the first panel display operation, and the second control is configured to be triggered to perform the second panel display operation. The first panel display operation may be a trigger operation for instructing to display a favorites folder panel, and the second panel display operation may be a trigger operation for instructing to display a favorites folder creation panel.

This embodiment does not limit how the first control and the second control are displayed. For example, the first control and the second control may be displayed simultaneously in the favorites folder list; or only the first control or the second control may be displayed in the favorites folder list at one time.

When only the first control or the second control is displayed, for example, it may be preset whether the first control or the second control is displayed in the favorites folder list. Alternatively, it is determined that the first control or the second control is displayed in the favorites folder list according to a preset condition. For example, when the preset condition is met, the first control is displayed in the favorites folder list, and when the preset condition is not met, the second control is displayed in the favorites folder list.

The preset condition may be set as needed. In some implementations, the preset condition may be set to a number of favorites folders of the current user being greater than or equal to a preset number. In this case, optionally, displaying the favorites folder list of the current user includes at least one of the following: in a case where a number of favorites folders of the current user is greater than or equal to a preset number, displaying a favorites folder list of the current user and displaying the first control and the first identifiers of the preset number of favorites folders in the favorites folder list; or in a case where the number of favorites folders of the current user is less than the preset number, displaying a favorites folder list of the current user and displaying the second control and the first identifiers of all the favorites folders of the current user in the favorites folder list.

The number of favorites folders may be understood as a total number of favorites folders used by the current user to favorite media content. The preset number may be set as needed. For example, the preset number may be set to 2, 3, or 5.

In the above implementation, no more than a preset number of favorites folders may be displayed in the favorites folder list, and the first control may be further displayed in the favorites folder list when the number of favorites folders of the user is large (e.g., greater than or equal to the preset number), to help the user view favorites folders not displayed in the favorites folder list. When the number of favorites folders of the user is small (e.g., less than the preset number), the second control is further displayed in the favorites folder list to help the user create a new favorites folder.

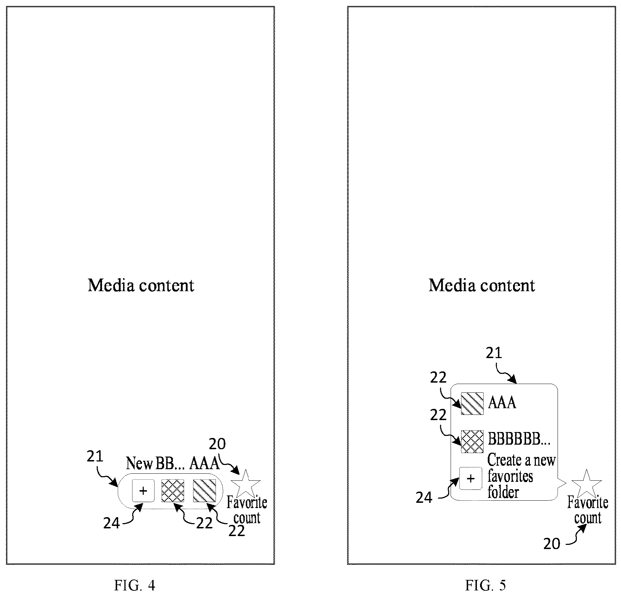

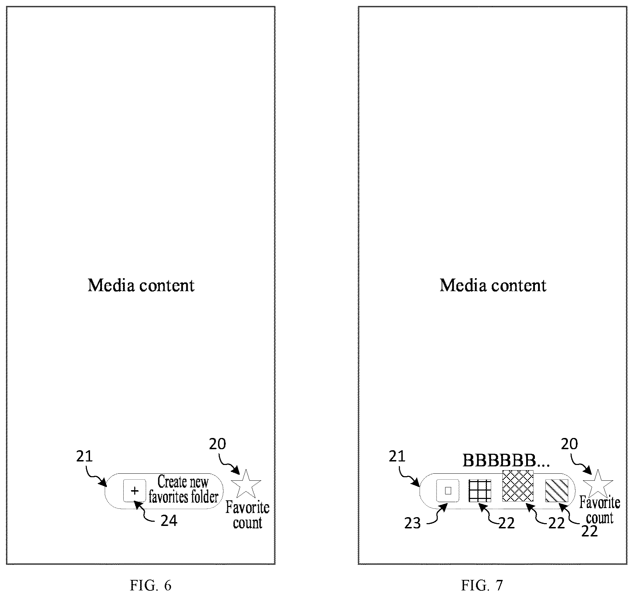

Taking the preset number being 3 as an example, when the number of favorites folders of the current user is greater than or equal to 3 (i.e., the preset number), the media content may be favorited in response to the favorite operation of the current user, a favorites folder list 21 of the current user may be displayed, and first identifiers 22 of three favorites folders and a first controls 23 may be displayed in the favorites folder list 21, as shown in FIGs. 2 and 3. When the number of the favorites folders of the current user is greater than 0 and less than 3, the media content may be favorited in response to the favorite operation of the current user, a favorites folder list 21 of the current user may be displayed, and a first identifier 22 of each favorites folder of the current user and a second control 24 may be displayed in the favorites folder list 21, as shown in FIGs. 4 and 5 (an example that the current user having two favorites folders is used in the figures). When the number of the favorites folders of the current user is 0, the media content may be favorited in response to the favorite operation of the current user, the favorites folder list 21 of the current user may be displayed, and the second control 24 may be displayed in the favorites folder list 21, as shown in FIG. 6.

In this embodiment, the favorites folder list 21 may be displayed in a preset area; or may be displayed in an associated area of a favorite control 20 of the media content (or a trigger position of the favorite operation), for example, displayed in the left area of the favorite control 20 of the media content, as shown in FIGs. 2 to 5. The way that objects (including identities and controls of favorites folders) in the favorites folder list 21 are displayed in the favorites folder list 21 are not limited. For example, objects in favorites folder list 21 may be arranged horizontally (as shown in FIGs. 2 and 4) or vertically (as shown in FIGs. 3 and 5) in the favorites folder list 21.

In this embodiment, when the first identifier 22 of the favorites folder is displayed in the favorites folder list 21, a third identifier of the corresponding favorites folder may be further displayed, for example, at an associated position of the first identifier 22. Specific position coordinates of the associated position are not limited. For example, as shown in FIGs. 2 to 5, when the first identifiers 22 (such as an icon) are arranged horizontally, the first identifiers 22 may be displayed within the favorites folder list 21, and the third identifiers (such as a name) corresponding to the first identifiers 22 may be displayed outside the favorites folder list 21, for example, above the corresponding first identifiers 22; and when the first identifiers 22 are arranged vertically, the third identifiers corresponding to the first identifiers 22 may be displayed within the favorites folder list 21, such as at the right side of the corresponding first identifiers 22.

In some embodiments, for a horizontal arrangement, when the favorites folder list is initially displayed or when the user does not select any favorites folder, the third identifier corresponding to each first identifier in the favorites folder list may be displayed in a first format. In this case, displaying the favorites folder list of the current user includes: displaying a favorites folder list of the current user, displaying first identifiers of at least part of favorites folders of the current user in a horizontal arrangement in the favorites folder list and displaying third identifiers associated with the respective first identifiers at associated positions of the first identifiers, where the third identifier associated with the first identifier and the first identifier are identifiers of the same favorites folder, and the third identifier is displayed in a first format.

The associated position of the first identifier may be considered as a position associated with a display position of the first identifier, such as a certain position around the display position of the first identifier.

For example, as shown in FIGs. 2 and 4, when the favorites folder list 21 of the current user is displayed, the first identifiers 22 of at least part of favorites folders may be displayed in a horizontal arrangement in the favorites folder list 21, and the third identifier of the corresponding favorites folder may be displayed in the first format at the associated position of (such as above) each first identifier 22. In addition, when the first control 23 and/or the second control 24 is displayed in the favorites folder, the first control 23/the second control 24 may be arranged horizontally together with the first identifier. In this case, a control name of the corresponding control may be further displayed at the associated position of the first control 23/second control 24.

S102. In response to a trigger operation for the first identifier, add the media content to the favorites folder corresponding to the first identifier on which the trigger operation acts.

The trigger operation for the first identifier may be a trigger operation for instructing to add the media content to the favorites folder corresponding to the first identifier. The trigger operation may be an operation of triggering a first identifier displayed in the favorites folder list, which may include a tap trigger operation and/or a swipe trigger operation. The tap trigger operation may be an operation of tapping a first identifier displayed in the favorites folder list. The swipe trigger operation may be an operation of lifting a finger/stylus after swiping to a first identifier displayed in the favorites folder list. The first identifier on which the trigger operation acts may be considered as the first identifier on which the trigger operation acts when the trigger of the trigger operation ends, such as the first identifier displayed at the trigger position of the trigger operation when the trigger of the trigger operation ends.

Specifically, when the trigger operation for a first identifier displayed in the favorites folder list is received, for example, when the trigger operation is ended after it is detected that the current user taps a first identifier displayed in the favorites folder list or swipes to a first identifier displayed in the favorites folder list, the media content may be added to the favorites folder corresponding to the first identifier.

In this embodiment, when the favorite operation for the media content is received, the media content may be favorited, and when the media content is favorited, the favorites folder list of the current user may be further displayed. Therefore, the user may achieve favoriting of the media content and display of the favorites folder list upon a trigger operation (i.e., a favorite operation). There is no need to first perform an operation to favorite the media content and then perform another operation to instruct the current application to display the favorites folder list; nor is it necessary to select a favorites folder before favoriting the media content, which can enrich the ways of favoriting media content.

In some implementations, the trigger operation includes a swipe trigger operation, and after displaying the favorites folder list of the current user, the method further includes: during execution of the swipe trigger operation, switching the third identifier associated with the first identifier to which the swipe trigger operation currently swipes to a second format, and undisplaying the third identifiers associated with the first identifiers to which the swipe trigger operation currently does not swipe.

In the above implementation, the user may be supported to add the media content to the favorites folder by swiping, and during the swiping of the user, the identifier of the favorites folder to which the user currently swipes (such as the first identifier and/or the second identifier) may be displayed in a different format.

Using the third identifier being a name as an example, when the favorites folder list 21 is initially displayed in response to the favorite operation, icons of at least part of favorites folders may be displayed in the favorites folder list 21, and the first control 23/second control 24 may be further displayed. The name of the corresponding favorites folder is displayed at the associated position 22 of the first identifier and the name of the corresponding control is displayed at the associated position of the first control 23/second control 24, as shown in FIGs. 2 and 4. In this case, both the name of the favorites folder and the name of the control may be displayed in the first format.

When the user swipes to the first identifier of a favorites folder, the name of the favorites folder corresponding to the first identifier 22 to which the user currently swipes may be switched from the first format to the second format, and the name of the favorites folder corresponding to the first identifier 22 to which the user currently does not swipe may be undisplayed, as shown in FIG. 7 (as an example, the user currently swipe to the first identifier 22 of the second favorites folder, counted from right to left). In addition, as shown in FIG. 7, a display format of the first identifier 22 to which the user currently swipes may be further switched. For example, a display size of the first identifier 22 to which the user currently swipes is increased.

It may be understood that when the user swipes to a position of a control displayed in the favorites folder list, the name of the control may also be switched from the first format to the second format, and further, the display format of the control may be switched.

In this embodiment, the first format and the second format may be different display formats. For example, identifier content displayed in the first format may be not less than identifier content displayed in the second format. In this case, optionally, the identifier content displayed by the third identifier in the second format is more than or the same as the identifier content displayed by the third identifier in the first format.

For example, in a case where identified content of a third identifier is not fully displayed in the first format, when the first format is switched to the second format, the identifier content displayed by the third identifier may be more than identifier content displayed by the third identifier in the first format. In a case where identifier content of a third identifier is fully displayed in the first format, when the first format is switched to the second display format, the identifier content displayed by the third identifier may be the same as the identifier content displayed by the third identifier in the first format, i.e., all the content of the third identifier is displayed.

Using the third identifier being the name as an example, in the first format, at most n characters may be displayed. For example, when a number of characters contained in the name is less than or equal to n, all characters contained in the name are displayed, such as the names "AAA" and "CCC" of the favorites folders shown in FIGs. 2 and 4. When the number of characters contained in the name is greater than n, the first n-1 characters in the name may be displayed, and an n^{th} character may be displayed as "..." to indicate to the user that the name is not fully displayed, such as the name "BB..." of the favorites folder shown in FIGs. 2 and 4. In the second format, at most m characters may be displayed. For example, when the number of characters contained in the name is less than or equal to m, all characters contained in the name are displayed. When the number of characters contained in the name is greater than m, the first m-1 characters in the name may be displayed and an m^{th} character is displayed as "..." to indicate to the user that the name is not fully displayed, such as the name "BBBBBB..." of the favorites folder shown in FIG. 7. m and n are both positive integers, m>n, and specific values of m and n may be set as needed. In FIGs. 2 and 4, n=3 is used as an example, and in FIG. 7, m=7 is used as an example.

It should be noted that in this embodiment, the user may also favorite the media content by performing an operation different from the favorite operation. For example, when a first operation for the media content is received, the media content may be added directly to the media content favorites list without displaying the favorites folder list of the current user; and/or, when a second operation for the media content is received, the favorites folder list of the current user may be displayed without adding the media content to the media content favorites list, and when it is detected that the user triggers the first identifier of a favorites folder in the favorites folder list, in response to the trigger operation, the media content may be added to the favorites folder corresponding to the first identifier, and the media content may be further added to the media content favorites list. The first operation/second operation and the favorite operation may be different trigger operations.

Furthermore, when the trigger operation for the first identifier is received, in addition to adding the media content to the favorites folder corresponding to the first identifier on which the trigger operation acts, the favorites folder list of the current user may be undisplayed, so that the user can view the media content.

In the method for favoriting media content provided in this embodiment, in response to a favorite operation for media content, the media content is added to a media content favorites list of the current user, and a favorites folder list of the current user is displayed, where the favorites folder list is configured to display first identifiers of at least part of favorites folders of the current user. In response to a trigger operation for a first identifier, the media content is added to a favorites folder corresponding to the first identifier on which the trigger operation acts. By means of the above technical solutions, this embodiment can enrich the ways of favoriting media content, allowing for adding the media content to the media content favorites list while displaying the favorites folder list.

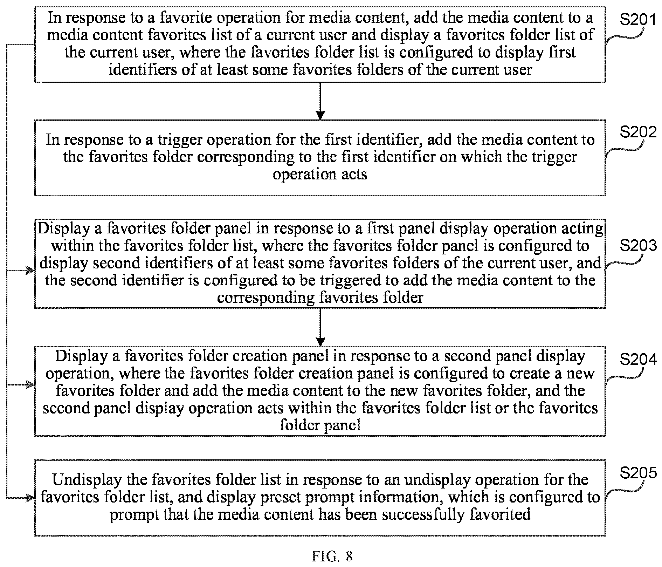

FIG. 8 is a schematic flowchart of another method for favoriting media content according to an embodiment of the present disclosure. The solution in this embodiment may be combined with one or more optional solutions in the above embodiment. Optionally, after displaying the favorites folder list of the current user, the method further includes: displaying a favorites folder panel in response to a first panel display operation acting within the favorites folder list, where the favorites folder panel is configured to display a second identifiers of at least part of favorites folders of the current user, and the second identifier is configured to be triggered to add the media content to the corresponding favorites folder.

Optionally, the method for favoriting media content provided in this embodiment further includes: displaying a favorites folder creation panel in response to a second panel display operation, where the favorites folder creation panel is configured to create a new favorites folder and add the media content to the new favorites folder, and the second panel display operation acts within the favorites folder list or the favorites folder panel.

Optionally, after displaying the favorites folder list of the current user, the method further includes: undisplaying the favorites folder list in response to an undisplay operation for the favorites folder list, and displaying preset prompt information, which is configured to prompt that the media content has been successfully favorited.

Correspondingly, as shown in FIG. 8, the method for favoriting media content provided in this embodiment may include the following steps.

S201. In response to a favorite operation for media content, add the media content to a media content favorites list of a current user and display a favorites folder list of the current user, and perform at least one of S202 to S205, where the favorites folder list is configured to display the first identifier of at least part of favorites folders of the current user.

S202. In response to a trigger operation for the first identifier, add the media content to the favorites folder corresponding to the first identifier on which the trigger operation acts.

S203. Display a favorites folder panel in response to a first panel display operation acting within the favorites folder list, where the favorites folder panel is configured to display the second identifier of at least part of favorites folders of the current user, and the second identifier is configured to be triggered to add the media content to the corresponding favorites folder.

The first panel display operation may be a trigger operation for instructing to display a favorites folder panel, such as an operation of triggering the first control displayed in the favorites folder list. The favorites folder panel may be a panel for displaying the second identifier of at least part of favorites folders of the current user, and the at least part of favorites folders may include at least the favorites folders corresponding to the first identifiers displayed in the favorites folder list. For example, the favorites folder list may be configured to display the first identifiers of no more than a preset number of favorites folders, and the favorites folder panel may be configured to display the second identifiers of all of the favorites folders of the current user.

The second identifier of a favorites folder may be considered as an identifier of the favorites folder displayed in the favorites folder panel, and a format of the second identifier may or may not be the same as a format of the first identifier/third identifier. For example, the second identifier may include an icon and/or a name of the corresponding favorites folder. The number of second identifiers displayed in the favorites folder panel may be greater than or equal to the number of first identifiers displayed in the favorites folder list. In other words, the number of favorites folders of the second identifiers displayed in the favorites folder panel may be greater than or equal to the number of favorites folders of the first identifiers displayed in the favorites folder list. For example, the favorites folder list may be configured to display the first identifiers of no more than a preset number of favorites folders, and the favorites folder panel may be configured to display the second identifiers of all of the favorites folders of the current user.

It should be noted that the favorites folder panel being configured to display the second identifiers of all of the favorites folders of the current user may be understood as that the user may view the second identifier of each favorites folder created by the user in the favorites folder panel directly or through an operation (such as a favorites folder switching operation). For example, when there is only a small number of favorites folders, the second identifiers of all of the favorites folders of the current user may be displayed directly in the favorites folder panel. When there is a large number of favorites folders, the second identifiers of the favorites folders of the current user may be switched to be displayed in the favorites folder panel based on the favorites folder switching operation of the user. To display the first identifiers/second identifiers of all the favorites folders of the current user may be considered as to display the first identifiers/second identifiers of all the favorites folders that can be displayed. For example, in a case where a favorites folder of the current user contains violation information, the first identifier/second identifier of this favorites folder of the current user may not be displayed.

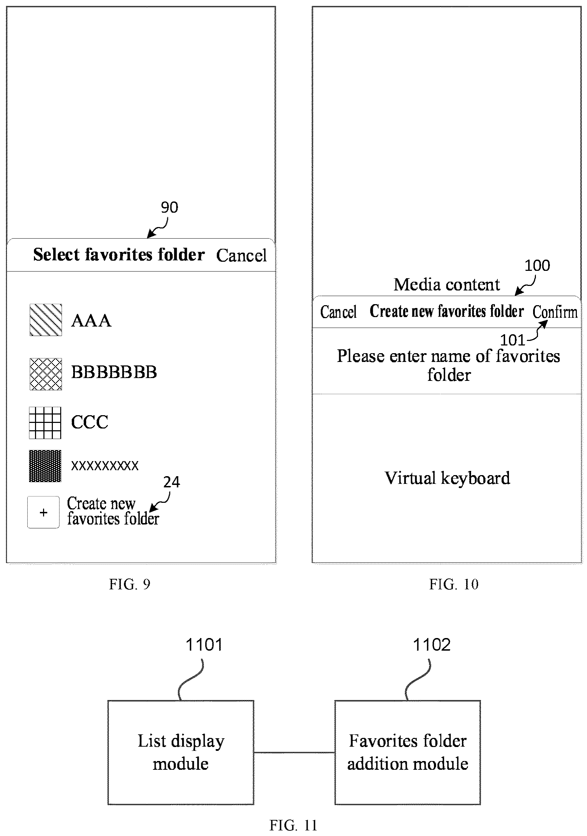

For example, as shown in FIGs. 2 and 3, the first control 23 may be displayed in the favorites folder list 21. Therefore, when it is detected that the current user triggers the first control 23, it can be determined that a first panel display operation is received and a favorites folder panel 90 is displayed in response to the first panel display operation. Second identifiers of at least part of favorites folders of the current user are displayed in the favorites folder panel 90, and a second control 24 may be further displayed, as shown in FIG. 9.

S204. Display a favorites folder creation panel in response to a second panel display operation, where the favorites folder creation panel is configured to create a new favorites folder and add the media content to the new favorites folder, and the second panel display operation acts within the favorites folder list or the favorites folder panel.

The second panel display operation may be a trigger operation for instructing to display a favorites folder creation panel, such as an operation of triggering a second control displayed in the favorites folder list or the favorites folder panel. The favorites folder creation panel may be a panel for the user to create a new favorites folder.

Specifically, when the favorites folder list 21 is displayed, the second control 24 may be displayed in the favorites folder list 21, as shown in FIGs. 4 and 5; and/or, when the favorites folder panel 90 is displayed, the second control 24 may be displayed in the favorites folder panel 90, as shown in FIG. 9. Therefore, when it is detected that the current user triggers the second control 24 displayed in the favorites folder list 21 or the second control 24 displayed in the favorites folder panel 90, the favorites folder creation panel 100 may be displayed, and a virtual keyboard may be further displayed, so that the current user enters the name of the favorites folder the user wants to create through the virtual keyboard, as shown in FIG. 10.

Therefore, the current user may set information of the new favorites folder the user wants to create in the favorites folder creation panel 100, such as setting a name and/or an icon of the new favorites folder, and may trigger a confirmation control 101 displayed in the favorites folder creation panel after the setting is complete.

Correspondingly, when the current application detects that the current user triggers the confirmation control 101 displayed in the favorites folder creation panel, a new favorites folder may be created based on the setting of the current user, the media content may be added to the new favorites folder, and the favorites folder creation panel 100 may be further undisplayed.

S205. Undisplay the favorites folder list in response to an undisplay operation for the favorites folder list, and display preset prompt information, which is configured to prompt that the media content has been successfully favorited.

The undisplay operation may be a trigger operation for instructing to undisplay the favorites folder list, such as an operation of triggering a non-control area outside the favorites folder list, an operation of triggering a blank area within the favorites folder list, or another gesture operation of instructing to undisplay the favorites folder list. The preset prompt information may be prompt information configured to prompt that the media content has been successfully favorited.

In this embodiment, after the current user performs a favorite operation, the favoriting of the media content may be completed regardless of whether the user performs the trigger operation for instructing to add the media content to the favorites folder list. Therefore, even if the current user performs an undisplay operation without performing the trigger operation, in other words, even if the user does not add the media content to any favorites folder, when the undisplay operation for the favorites folder list is received, the current user may also be prompted that the media content has been successfully favorited.

The method for favoriting media content provided in this embodiment can enrich the ways of favoriting media content and the ways of creating favorites folders, thereby improving the favoriting experience of the user.

FIG. 11 is a block diagram of a structure of an apparatus for favoriting media content according to an embodiment of the present disclosure. The apparatus may be implemented by software and/or hardware, may be configured in an electronic device, typically in a mobile phone or a tablet computer, and may favorite media content by performing the method for favoriting media content. As shown in FIG. 11, the apparatus for favoriting media content provided in this embodiment may include: a list display module 1101 and a favorites folder addition module 1102.

The list display module 1101 is configured to: in response to a favorite operation for media content, add the media content to a media content favorites list of a current user and display a favorites folder list of the current user, where the favorites folder list is configured to display a first identifier of at least part of favorites folders of the current user.

The favorites folder addition module 1102 is configured to: in response to a trigger operation for the first identifier, add the media content to the favorites folder corresponding to the first identifier on which the trigger operation acts.

The apparatus for favoriting media content provided in this embodiment, in response to a favorite operation for the media content, adds the media content to a media content favorites list of a current user and displays a favorites folder list of the current user through the list display module, where the favorites folder list is configured to display a first identifier of at least part of favorites folders of the current user; and in response to a trigger operation for a first identifier, adds the media content to a favorites folder corresponding to the first identifier on which the trigger operation acts through the favorites folder addition module. By means of the above technical solutions, this embodiment can enrich the ways of favoriting media content, allowing for adding the media content to the media content favorites list while displaying the favorites folder list.

Further, the apparatus for favoriting media content provided in this embodiment may further include: a first panel display module, configured to: after the favorites folder list of the current user is displayed, display a favorites folder panel in response to a first panel display operation acting within the favorites folder list, where the favorites folder panel is configured to display a second identifier of at least part of favorites folders of the current user, and the second identifier is configured to be triggered to add the media content to the corresponding favorites folder.

Further, the apparatus for favoriting media content provided in this embodiment may further include: a second panel display module configured to display a favorites folder creation panel in response to a second panel display operation, where the favorites folder creation panel is configured to create a new favorites folder and add the media content to the new favorites folder, and the second panel display operation acts within the favorites folder list or the favorites folder panel.

In the above scenario, at least one of a first control and a second control may be displayed in the favorites folder list, the first control may be configured to be triggered to perform the first panel display operation, and the second control may be configured to be triggered to perform the second panel display operation.

In the above solution, the list display module 1101 may be configured to perform at least one of the following: in a case where a number of favorites folders of the current user is greater than or equal to a preset number, displaying a favorites folder list of the current user and displaying the first control and the first identifiers of the preset number of favorites folders in the favorites folder list; or in a case where the number of favorites folders of the current user is less than the preset number, displaying a favorites folder list of the current user and displaying the second control and the first identifiers of all the favorites folder of the current user in the favorites folder list.

In the above solution, the list display module 1101 may be configured to: display a favorites folder list of the current user, display a first identifier of at least part of favorites folders of the current user in a horizontal arrangement in the favorites folder list and display third identifiers associated with the respective first identifiers at associated positions of the first identifiers, where the third identifier associated with the first identifier and the first identifier are identifiers of the same favorites folder, and the third identifier is displayed in a first format.

In the above solution, the trigger operation may include a swipe trigger operation, and the apparatus for favoriting media content provided in this embodiment may further include: a format switching module, configured to: during execution of the swipe trigger operation, switch the third identifier associated with the first identifier to which the swipe trigger operation currently swipes to a second format, and undisplay the third identifiers associated with the first identifiers to which the swipe trigger operation currently does not swipe.

In the above solution, identifier content displayed by the third identifier in the second format is more than or the same as identifier content displayed by the third identifier in the first format.

Further, the apparatus for favoriting media content provided in this embodiment may further include: an undisplay module, configured to: after the favorites folder list of the current user is displayed, undisplay the favorites folder list in response to an undisplay operation for the favorites folder list, and display preset prompt information, which is configured to prompt that the media content has been successfully favorited.

The apparatus for favoriting media content provided in this embodiment of the present disclosure may perform the method for favoriting media content according to any one of the embodiments of the present disclosure, and has corresponding functional modules and beneficial effects for performing the method for favoriting media content. For the technical details not explicitly described in this embodiment, reference may be made to the method for favoriting media content provided in any embodiment of the present disclosure.

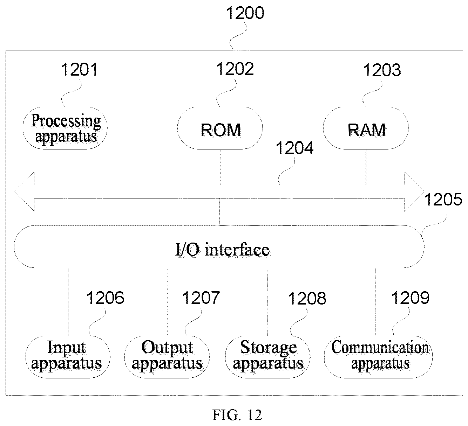

Hereinafter, reference is made to FIG. 12, which is a schematic diagram of a structure of an electronic device (for example, a terminal device) 1200 suitable for implementing the embodiments of the present disclosure. A terminal device in this embodiment of the present disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in FIG. 12 is merely an example, and shall not impose any limitation on the function and scope of use of the embodiments of the present disclosure.

As shown in FIG. 12, the electronic device 1200 may include a processing apparatus (e.g., a central processing unit or a graphics processing unit) 1201 that may perform a variety of appropriate actions and processing in accordance with a program stored in a read-only memory (ROM) 1202 or a program loaded from a storage apparatus 1208 into a random access memory (RAM) 1203. The RAM 1203 further stores various programs and data required for the operation of the electronic device 1200. The processing apparatus 1201, the ROM 1202, and the RAM 1203 are connected to one another through a bus 1204. An input/output (I/O) interface 1205 is also connected to the bus 1204.

Generally, the following apparatuses may be connected to the I/O interface 1205: an input apparatus 1206 including, for example, a touchscreen, a touchpad, a keyboard, a mouse, a camera, a microphone, an accelerometer, and a gyroscope; an output apparatus 1207 including, for example, a liquid crystal display (LCD), a speaker, and a vibrator; the storage apparatus 1208 including, for example, a tape and a hard disk; and a communication apparatus 1209. The communication apparatus 1209 may allow the electronic device 1200 to perform wireless or wired communication with other devices to exchange data. Although FIG. 12 shows the electronic device 1200 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 1209, installed from the storage apparatus 1208, or installed from the ROM 1202. When the computer program is executed by the processing apparatus 1201, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: in response to a favorite operation for media content, add the media content to a media content favorites list of a current user and display a favorites folder list of the current user, where the favorites folder list is configured to display a first identifier of at least part of favorites folders of the current user; and in response to a trigger operation for the first identifier, add the media content to the favorites folder corresponding to the first identifier on which the trigger operation acts.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a module does not constitute a limitation on the unit itself in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides a method for favoriting media content. The method includes:
in response to a favorite operation for media content, adding the media content to a media content favorites list of a current user and displaying a favorites folder list of the current user, where the favorites folder list is configured to display a first identifier of at least part of favorites folders of the current user; and
in response to a trigger operation for the first identifier, adding the media content to the favorites folder corresponding to the first identifier on which the trigger operation acts.

According to one or more embodiments of the present disclosure, Example 2 is based on the method of Example 1, where after the displaying of a favorites folder list of the current user, the method further includes:
displaying a favorites folder panel in response to a first panel display operation acting within the favorites folder list, where the favorites folder panel is configured to display a second identifier of at least part of favorites folders of the current user, and the second identifier is configured to be triggered to add the media content to the corresponding favorites folder.

According to one or more embodiments of the present disclosure, Example 3 is based on the method of Example 1, where the method further includes:
displaying a favorites folder creation panel in response to a second panel display operation, where the favorites folder creation panel is configured to create a new favorites folder and add the media content to the new favorites folder, and the second panel display operation acts within the favorites folder list or the favorites folder panel.

According to one or more embodiments of the present disclosure, Example 4 is based on the method of any one of Examples 1 to 3, where at least one of a first control and a second control is displayed in the favorites folder list, the first control is configured to be triggered to perform the first panel display operation, and the second control is configured to be triggered to perform the second panel display operation.

According to one or more embodiments of the present disclosure, Example 5 is based on the method of Example 4, where the displaying a favorites folder list of the current user includes at least one of the following:
in a case where a number of favorites folders of the current user is greater than or equal to a preset number, displaying a favorites folder list of the current user and displaying the first control and the first identifiers of the preset number of favorites folders in the favorites folder list; or
in a case where the number of favorites folders of the current user is less than the preset number, displaying a favorites folder list of the current user and displaying the second control and the first identifiers of all the favorites folder of the current user in the favorites folder list.

According to one or more embodiments of the present disclosure, Example 6 is based on the method of any one of Examples 1 to 3, where the displaying a favorites folder list of the current user includes:
displaying a favorites folder list of the current user, displaying a first identifier of at least part of favorites folders of the current user in a horizontal arrangement in the favorites folder list and displaying third identifiers associated with the respective first identifiers at associated positions of the first identifiers, where the third identifier associated with the first identifier and the first identifier are identifiers of the same favorites folder, and the third identifier is displayed in a first format.

According to one or more embodiments of the present disclosure, Example 7 is based on the method of Example 6, where the trigger operation includes a swipe trigger operation, and after the displaying a favorites folder list of the current user, the method further includes:
during execution of the swipe trigger operation, switching the third identifier associated with the first identifier to which the swipe trigger operation currently swipes to a second format, and undisplaying the third identifiers associated with the first identifiers to which the swipe trigger operation currently does not swipe.

According to one or more embodiments of the present disclosure, Example 8 is based on the method of Example 7, where identifier content displayed by the third identifier in the second format is more than or the same as identifier content displayed by the third identifier in the first format.

According to one or more embodiments of the present disclosure, Example 9 is based on the method of any one of Examples 1 to 3, where after the displaying a favorites folder list of the current user, the method further includes:
undisplaying the favorites folder list in response to an undisplay operation for the favorites folder list, and displaying preset prompt information, which is configured to prompt that the media content has been successfully favorited.

According to one or more embodiments of the present disclosure, Example 10 provides an apparatus for favoriting media content, the apparatus including:
a list display module, configured to: in response to a favorite operation for media content, add the media content to a media content favorites list of a current user and display a favorites folder list of the current user, where the favorites folder list is configured to display a first identifier of at least part of favorites folders of the current user; and
a favorites folder addition module, configured to: in response to a trigger operation for the first identifier, add the media content to the favorites folder corresponding to the first identifier on which the trigger operation acts.

According to one or more embodiments of the present disclosure, Example 11 provides an electronic device, the electronic device including:
one or more processors; and
a memory configured to store one or more programs, where
the one or more programs is executed by the one or more processors to cause the one or more processors to implement the method for favoriting media content according to any of Examples 1 to 9.

According to one or more embodiments of the present disclosure, Example 12 provides a computer-readable storage medium having a computer program stored thereon, where the computer program, when executed by a processor, implement the method for favoriting media content according to any of Examples 1 to 9.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A method for favoriting media content, comprising:
in response to a favorite operation for media content, adding the media content to a media content favorites list of a current user and displaying a favorites folder list of the current user, the favorites folder list being configured to display a first identifier of at least part of favorites folders of the current user; and
in response to a trigger operation for the first identifier, adding the media content to a favorites folder corresponding to the first identifier on which the trigger operation acts.

2. The method according to claim 1, wherein, after displaying the favorites folder list of the current user, the method further comprises:
displaying a favorites folder panel in response to a first panel display operation acting within the favorites folder list, wherein the favorites folder panel is configured to display a second identifier of at least part of the favorites folders of the current user, and the second identifier is configured to be triggered to add the media content to the corresponding favorites folder.

3. The method according to claim 1, further comprising:
displaying a favorites folder creation panel in response to a second panel display operation, wherein the favorites folder creation panel is configured to create a new favorites folder and add the media content to the new favorites folder, and the second panel display operation acts within the favorites folder list or the favorites folder panel.

4. The method according to any of claims 1 to 3, wherein at least one of a first control or a second control is displayed in the favorites folder list, the first control is configured to be triggered to perform the first panel display operation, and the second control is configured to be triggered to perform the second panel display operation.

5. The method according to claim 4, wherein displaying the favorites folder list of the current user comprises at least one of the following:
in a case where a number of favorites folders of the current user is greater than or equal to a preset number, displaying a favorites folder list of the current user and displaying the first control and first identifiers of the preset number of favorites folders in the favorites folder list; or
in a case where the number of favorites folders of the current user is less than the preset number, displaying a favorites folder list of the current user and displaying the second control and first identifiers of all of the favorites folders of the current user in the favorites folder list.

6. The method according to any of claims 1 to 3, wherein displaying the favorites folder list of the current user comprises:
displaying a favorites folder list of the current user, displaying first identifiers of at least part of the favorites folders of the current user in a horizontal arrangement in the favorites folder list; and
displaying third identifiers associated with the respective first identifiers at associated positions of the first identifiers, wherein the third identifier associated with the first identifier and the first identifier are identifiers of the same favorites folder, and the third identifier is displayed in a first format.

7. The method according to claim 6, wherein the trigger operation comprises a swipe trigger operation, and after displaying the favorites folder list of the current user, the method further comprises:
during execution of the swipe trigger operation, switching the third identifier associated with the first identifier to which the swipe trigger operation currently swipes to a second format, and undisplaying the third identifiers associated with the first identifiers to which the swipe trigger operation currently does not swipe.

8. The method according to claim 7, wherein identifier content displayed by the third identifier in the second format is more than or the same as identifier content displayed by the third identifier in the first format.

9. The method according to any one of claims 1 to 3, wherein after displaying the favorites folder list of the current user, the method further comprises:
undisplaying the favorites folder list in response to an undisplay operation for the favorites folder list, and displaying preset prompt information, which is configured to prompt that the media content has been successfully favorited.

10. An apparatus for favoriting media content, comprising:
a list display module, configured to: in response to a favorite operation for media content, add the media content to a media content favorites list of a current user and display a favorites folder list of the current user, the favorites folder list being configured to display a first identifier of at least part of favorites folders of the current user; and
a favorites folder addition module, configured to: in response to a trigger operation for the first identifier, add the media content to a favorites folder corresponding to the first identifier on which the trigger operation acts.

11. An electronic device, comprising:
at least one processor; and
a memory communicatively connected to the at least one processor, wherein
the memory stores a computer program executable by the at least one processor, and the computer program is executed by the at least one processor to cause the at least one processor to perform the method for favoriting media content according to any of claims 1 to 9.

12. A computer-readable storage medium, storing computer instructions that, when executed by a processor, implement the method for favoriting media content according to any of claims 1 to 9.
